# EUROPEAN PATENT APPLICATION

(11) **EP 1 729 089 A1**
(43) Date of publication of application: **06.12.2006**
(21) Application number: 05726671.0
(22) Date of filing: 15.03.2005
(51) Int. Cl.: G01C 21/00, G08G 1/0969, G09B 29/10

(54) **NAVIGATION DEVICE, NAVIGATION METHOD, NAVIGATION PROGRAM, AND COMPUTER-READABLE RECORDING MEDIUM**

(30) Priority: 22.03.2004 JP 2004082861
(71) Applicant: Pioneer Corporation, Tokyo 153-8654 (JP)
(72) Inventor: KUSUMOTO, Yuuki; c/o Pioneer Corporation, Kawagoe, Saitama;3508555 (JP)
(74) Representative: Haley, Stephen
(86) International application number: PCT/JP2005/004490
(87) International publication number: WO 2005/090916

(57) **Abstract**

A 3D surround system (1.00) including a plurality of speakers is provided, a guidance-information acquiring unit (101) acquires information on route guidance, and a control unit (102) controls output of a guide sound so that a direction from which the guide sound is heard moves based on the information acquired by the guidance-information acquiring unit (101) by using at least two speakers included in a speaker group (103) at the same time. In addition, the output of the guide sound is controlled by using a speaker only for low-pitched sound reproduction (104) included in the speaker group (103) and the speaker group (103) at the same time.

## Description

### TECHNICAL FIELD

The present invention relates to a navigation device, a navigation method, a navigation program, and a computer-readable recording medium.

### BACKGROUND ART

Conventionally, such a technology is disclosed that a driver can properly recognize a traveling direction by means of changing a direction of a guide voice being emitted by arranging a plurality of speakers for guidance (see, for example, Patent Document 1 and Patent Document 2) .

Patent Document 1: Japanese Patent Laid-Open Publication No. H7-160996
Patent Document 2: Japanese Patent Laid-Open Publication No. H9-72752

### DISCLOSURE OF INVENTION

### PROBLEM TO BE SOLVED BY THE INVENTION

In the above-mentioned conventional technology, however, even if the direction in which the guide voice is emitted is changed, since a 3D surround system is not used, it is incapable of making the guide voice sound as if the guide voice is moving. Hence, there has been a problem in which, in a traveling car, the direction of the traveling and the direction of the emitted guide voice do not always correspond to each other. This might cause an operator (driver) to feel uncomfortable.

In addition, there has been a problem in which it cannot cause the operator to more intuitively recognize hazard information, attention-calling information, or the like in the traveling direction, by using the sound.

Moreover, there has also been a problem in which a direction to a predetermined point, such as a destination, cannot be notified to the operator by only using the sound.

### MEANS FOR SOLVING PROBLEM

A navigation device according to the invention of claim 1 is provided with a 3D surround system including a plurality of speakers, and includes a guidance-information acquiring unit that acquires information on route guidance; and a control unit that controls output of a guide sound so that a direction from which the guide sound is heard moves, based on the information acquired by the guidance-information acquiring unit, using at least two speakers among the speakers at the same time.

Moreover, a navigation device according to the invention of claim 5 is provided with a 3D surround system including a plurality of speakers, and includes a guidance-information acquiring unit that acquires information on guidance; and a control unit that controls output of a guide sound based on the information acquired by the guidance-information acquiring unit using a speaker only for low-pitched sound reproduction and a speaker other than the speaker only for low-pitched sound reproduction among the speakers.

Furthermore, a navigation device according to the invention of claim 7 is provided with a 3D surround system including a plurality of speakers, and includes a predetermined-point-information acquiring unit that acquires information on a predetermined point; and a control unit that controls output of a guide sound so that the guide sound is heard from a direction of the predetermined point based on the information acquired by the predetermined-point-information acquiring unit.

Moreover, a navigation method according to the invention of claim 9 uses a 3D surround system including a plurality of speakers, and includes a guidance-information acquiring step of acquiring information on route guidance; and a control step of controlling output of a guide sound so that a direction from which the guide sound is heard moves, based on the information acquired at the guidance-information acquiring step, using at least two speakers among the speakers at the same time.

Furthermore, a navigation method according to the invention of claim 10 uses a 3D surround system including a plurality of speakers, and includes a guidance-information acquiring step of acquiring information on guidance; and a control step of controlling output of a guide sound based on the information acquired at the guidance-information acquiring step using a speaker only for low-pitched sound reproduction and a speaker other than the speaker only for low-pitched sound reproduction among the speakers.

Moreover, a navigation method according to the invention of claim 11 uses a 3D surround system including a plurality of speakers, and includes a predetermined-point-information acquiring step of acquiring information on a predetermined point; and a control step of controlling output of a guide sound so that the guide sound is heard from a direction of the predetermined point based on the information acquired at the predetermined-point-information acquiring step.

Furthermore, a navigation program according to the invention of claim 12 causes a computer to execute any one of the navigation methods according to claims 9 to 11.

Moreover, a computer-readable recording medium according to the invention of claim 13 stores therein the navigation program according to claim 12.

### BRIEF DESCRIPTION OF DRAWINGS

Fig. 1 is a block diagram illustrating an example of a functional configuration of a navigation device according to an embodiment of the present invention;
Fig. 2 is a flowchart illustrating an example of a procedure of a process performed by the navigation device according to the embodiment of the present invention;
Fig. 3 is a flowchart illustrating another example of a procedure of a process performed by the navigation device according to the embodiment of the present invention;
Fig. 4 is a flowchart illustrating another example of a procedure of a process performed by the navigation device according to the embodiment of the present invention;
Fig. 5 is a block diagram illustrating an example of a hardware configuration of the navigation device according to an example of the present invention;
Fig. 6 is an explanatory diagram illustrating an example of a typical guidance pattern of the navigation device according to the example of the present invention;
Fig. 7 is an explanatory diagram illustrating another example of a typical guidance pattern of the navigation device according to the example of the present invention;
Fig. 8 an explanatory diagram illustrating another example of a typical guidance pattern of the navigation device according to the example of the present invention;
Fig. 9 an explanatory diagram illustrating another example of a typical guidance pattern of the navigation device according to the example of the present invention;
Fig. 10 an explanatory diagram illustrating another example of a typical guidance pattern of the navigation device according to the example of the present invention;
Fig. 11 is a flowchart illustrating a procedure of a process performed by a navigation device according to an example of the present invention (Part 1);
Fig. 12 is a flowchart illustrating a procedure of a process performed by a navigation device according to an example of the present invention (Part 2);
Fig. 13 is an explanatory diagram illustrating another example of a typical guidance pattern of the navigation device according to the example of the present invention;
Fig. 14 is an explanatory diagram illustrating another example of a typical guidance pattern of the navigation device according to the example of the present invention; and
Fig. 15 is an explanatory diagram illustrating another example of a typical guidance pattern of the navigation device according to the example of the present invention.

### EXPLANATIONS OF LETTERS OR NUMERALS

- 100:: 3D surround system
- 101:: guidance-information acquiring unit
- 102:: control unit
- 103, 511-515:: speaker group
- 104,: 516: low-pitched sound speaker (subwoofer)
- 105:: predetermined-point-information acquiring unit
- 500:: navigation control unit
- 501:: user operation unit
- 502:: display unit
- 503:: position recognizing unit
- 504:: recording medium
- 505:: recording-medium decoding unit
- 506:: guide-sound output unit
- 507:: point retrieving unit
- 508:: route searching unit
- 509:: route guiding unit
- 510:: guide-sound generating unit

### BEST MODE(S) FOR CARRYING OUT THE INVENTION

Exemplary embodiments of a navigation device, a navigation method, a navigation program, and a computer-readable recording medium according to the present invention will be explained in detail below with reference to the accompanying drawings.

### (Functional Configuration of Navigation Device)

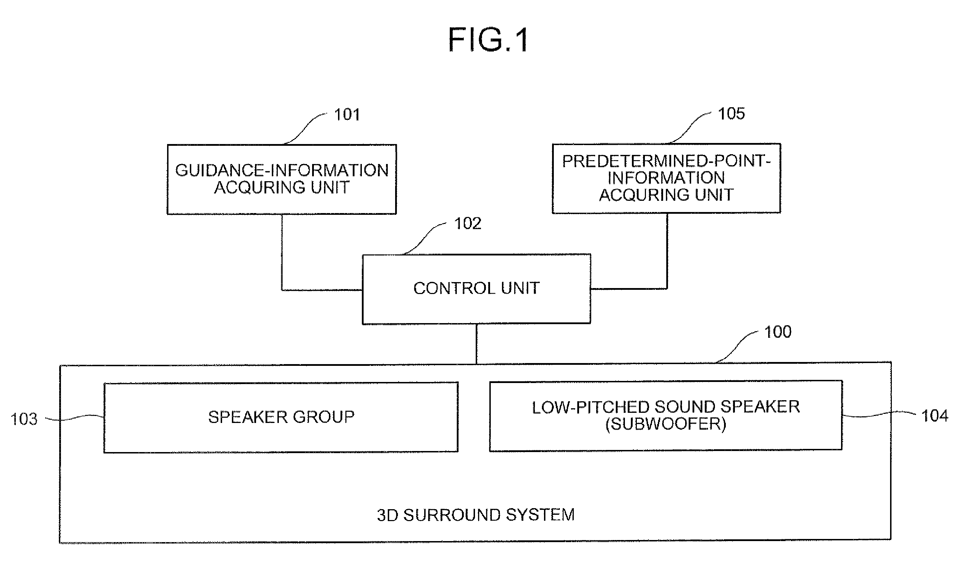

First, a navigation device according to an embodiment of the present invention will be described. Fig. 1 is a block diagram illustrating an example of a functional configuration of the navigation device according to the embodiment of the present invention.

As shown in Fig. 1, the navigation device installed in a vehicle (including a four-wheel vehicle and a two-wheel vehicle) or the like is configured so as to include a 3D surround system 100 including a plurality of speakers, a guidance-information acquiring unit 101, a control unit 102, and a predetermined-point-information acquiring unit 105.

The 3D surround system 100 has a speaker group 103 constituted by a plurality of speakers, and a low-pitched sound speaker (subwoofer) 104. The guidance-information acquiring unit 101 acquires information on route guidance.

The control unit 102 controls, based on the information acquired by the guidance-information acquiring unit 101, output of a guide sound so that the direction from which this guide sound is heard moves by using at least two speakers included in the speaker group 103 at the same time. The control unit 102 also controls the output of the guide sound so that the guide sound is heard substantially from the front side in the traveling direction, and then moved substantially toward the guidance direction based on the information acquired by the guidance-information acquiring unit 101.

In addition, the control unit 102 controls output of a sound effect included in the guide sound so that the sound effect is heard substantially from the front side in the moving direction, then moved substantially toward the guidance direction based on the information acquired by the guidance-information acquiring unit 101, and subsequently controls output of a guide voice of the guide sound so that the guide sound is heard substantially from the guidance direction based on the information acquired by the guidance-information acquiring unit 101. The sound effect is a guide tone for calling attention, such as a sound "pong" or "ding dong".

These controls may be carried out only for of the guidance given just before a branch point, and the usual guidance may be carried out for other guidance (for example, the guidance at 700 meters before the point, the guidance at 300 meters before the point, or the like).

In addition, the control unit 102 may control the output of the guide sound based on the information acquired by the guidance-information acquiring unit 101 using the low-pitched sound speaker (subwoofer) 104 and at least one speaker in the speaker group 103 at the same time.

The control unit 102 may use the low-pitched sound speaker 104 based on hazard information or attention-calling information in the traveling direction among pieces of information acquired by the guidance-information acquiring unit 101.

The predetermined-point-information acquiring unit 105 acquires information on a predetermined point. At that time, the control unit 102 may control, based on the information acquired by the predetermined-point-information acquiring unit 105, the output of the guide sound so that the guide sound is heard from the direction of the above-mentioned predetermined point. The information on the above-mentioned predetermined point may be information on a destination point in route guidance or a registered point that has been arbitrarily set.

### (Procedure of Process by Navigation Device)

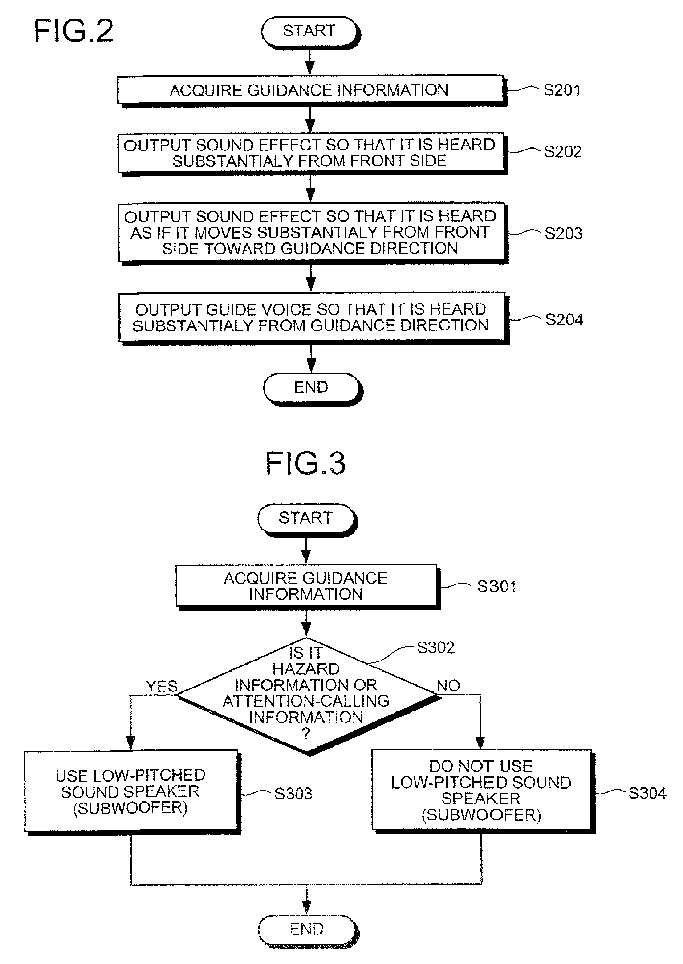

Next, a procedure of a process performed by the navigation device according to the embodiment of the present invention will be described. Fig. 2 is a flowchart illustrating an example of the procedure of the process by the navigation device according to the embodiment of the present invention. As shown in the flowchart in Fig. 2, the navigation device illustrated in Fig. 1 acquires guidance information in advance (step S201).

Thereafter, using one or more speakers in the speaker group 103, the sound effect (for example, a tone) is output first so that it may be heard substantially from the front side in the traveling direction (step S202). Next, following the output heard substantially from the front side in the traveling direction at step S202, the sound effect (for example, the tone) is output so that the sound effect is heard as if moving substantially toward the guidance direction based on the guidance information acquired at step S201 (step S203).

Subsequently, the guide voice is output so that the guide voice is heard substantially from the guidance direction to which the above-mentioned guide tone is moved (step S204), and a series of process is ended. Thus, it can be intuitively recognized that the direction to which the guide tone is moved is the guidance direction, thereby making it possible to reduce misconception of the guidance direction.

Fig. 3 is a flowchart illustrating another example of the procedure of the process by the navigation device according to the embodiment of the present invention. As shown in the flowchart in Fig. 3, the navigation device illustrated in Fig. 1 acquires the guidance information in advance (step S301).

Next, it is determined whether the guidance information acquired at step S301 is the hazard information or the attention-calling information (step S302). If the guidance information is the hazard information or the attention-calling information (step S302: YES), the subwoofer 104 is used along with a predetermined speaker in the speaker group 103 upon outputting the guidance information to output the guide sound (mainly, the guide tone) (step S303), and a series of the process is ended.

Meanwhile, at step S302, if the guidance information is neither the hazard information nor the attention-calling information (step S302: NO), only the predetermined speaker in the speaker group 103 is used without using the subwoofer 104 to output the guide sound (step S304), and a series of the process is ended.

As described above, by using the subwoofer 104 upon outputting the guidance information when the guidance information is the hazard information or the attention-calling information, it can be perceived unconsciously that there is a situation in danger or a situation that a attention must be called in the traveling direction, thereby making it possible to contribute to safer driving and travel.

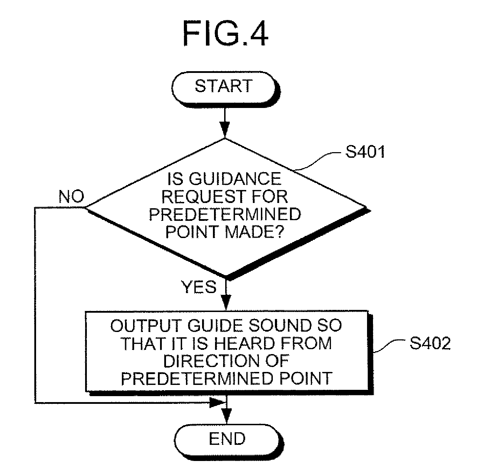

Fig. 4 is a flowchart illustrating still another example of the procedure of the process performed by the navigation device according to the embodiment of the present invention. As shown in the flowchart in Fig. 4, the navigation device illustrated in Fig. 1 acquires the guidance information in advance (step S301).

Next, it is determined whether a guidance request for the predetermined point (for example, the destination point in the route guidance or the registered point that has been registered in advance) is made from the operator (for example, the driver) (step S401). If no guidance request is made (step S401: NO), the process is ended without doing anything. Meanwhile, if the guidance request is made (step S401: YES), the guide sound (for example, the guide tone, the guide voice, or the like) is output so that the guide sound is heard from the direction of the above-mentioned predetermined point (step S402), and a series of the process is ended.

As described above, by notifying the direction of the predetermined point (for example, the destination point or the registered point) with the guide sound, it is possible to readily recognize the direction of the predetermined point, such as the destination point or the registered point toward which the vehicle is traveling at present, without checking a display screen.

### EXAMPLE

### (Hardware Configuration)

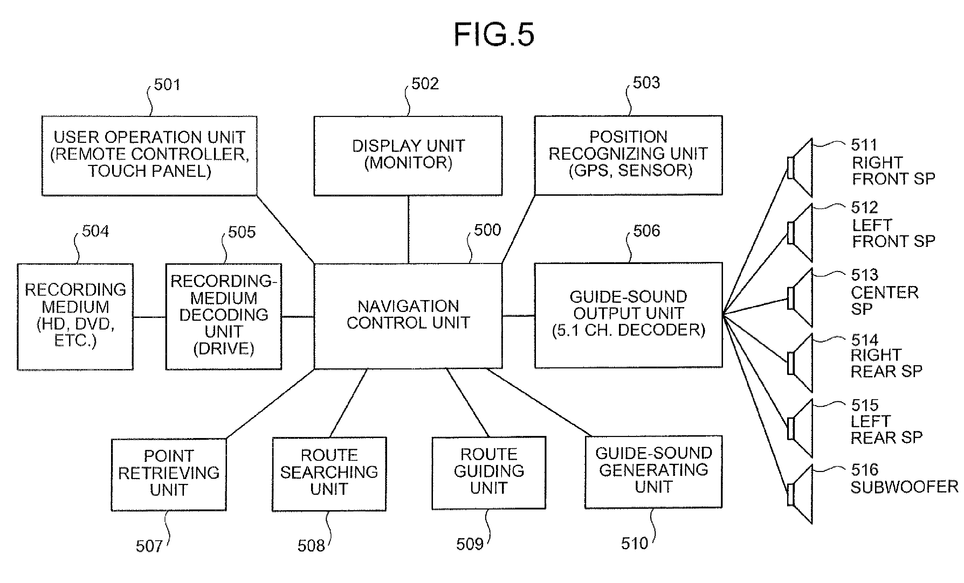

Next, a hardware configuration of the navigation device according to an example of the present invention will be described. Fig. 5 is a block diagram illustrating an example of the hardware configuration of the navigation device according to the example of the present invention.

As shown in Fig. 5, the navigation device has a configuration that includes a navigation control unit 500, a user operation unit 501, a display unit 502, a position recognizing unit 503, a recording medium 504, a recording-medium decoding unit 505, a guide-sound output unit 506, a point retrieving unit 507, a route searching unit 508, a route guiding unit 509, a guide-sound generating unit 510, a right front speaker (SP) 511, a left front SP 512, a center SP 513, a right rear SP 514, a left rear SP 515, and a subwoofer 516.

The navigation control unit 500 controls the whole navigation device. The user operation unit 501 includes a manual operation button, a remote controller, a touch panel, or the like. The display unit 502 includes a liquid crystal display, an organic EL display, or the like.

The position recognizing unit 503 acquires self-vehicle position information. The self-vehicle position information herein is to receive an radio wave from a GPS satellite to calculate for a geometric position with respect to the GPS satellite, and as a matter of course, the measurement can be carried out anywhere on the earth. As the radio wave, an L1 wave, which is a carrier wave of 1,575.42 MHz containing a C/A (Coarse and Access) code and a navigation message, is used. Thus, the current position of the vehicle (latitude and longitude) is detected. The information collected by various sensors, such as a speed sensor and a gyro sensor, may be added.

The recording medium 504 is, for example, a hard disk (HD). The recording medium 504 may be, instead of or in addition to the HD, a removable recording medium such as a DVD, a compact disk (CD), or the like. The recording-medium decoding unit 505 controls reading/writing from/to the HD, the DVD, or the CD.

The navigation control unit 500 outputs which position on a map the vehicle is traveling to the display unit 502 based on the self-vehicle position information calculated by the position recognizing unit 503 and map DB information acquired from the recording medium 504 through the recording-medium decoding unit 505.

The guide-sound output unit 506 creates stereophonic sounds by controlling the output to the connected speaker.

The point retrieving unit 507 retrieves an arbitrary point to output to the display unit 502 based on the information input from the user operation unit 501. The route searching unit 508 computes an optimal route to this point based on the point information acquired by the point retrieving unit 507. The route guiding unit 509 generates real-time route guidance information based on the information acquired by the route searching unit 508 and the self-vehicle position information.

The guide-sound generating unit 510 generates data of the tone corresponding to a pattern and of the voice. In other words, based on the route information, setting of a virtual sound source and generation of voice guidance information corresponding to a guidance point are carried out to be output to the sound output unit. Data generation of the tone and voice may be carried out by setting up to compute the virtual sound source in real time, or by setting up the virtual source in accordance with the guidance pattern assumed in advance and reading the recorded data from the recording medium 504.

As described above, by registering in advance, the function can be realized without the need to install a dedicated sound signal processing chip (DSP) or a CPU capable of performing high-speed real-time data processing.

The speakers that constitute the 3D surround system 100 achieves 5.1 ch. by six speakers, i.e., the right front SP 511, the left front SP 512, the center SP 513, the right rear SP 514, the left rear SP 515, and the subwoofer 516. In other words, the 5-channel speakers 511 through 515 reproduce the sound in the bandwidth of 20 Hz to 20 kHz while the dedicated subwoofer 516 only reproduces the sound of the lower bandwidth of 120 Hz or less. Since the subwoofer 516 has a narrow reproduction bandwidth, it is considered as "0.1 ch." and the system as a whole is referred to as 5.1 ch. It realizes acoustic environment which is further stereoscopic and realistic compared to a stereo output and enables flexible movement of a sound field, and woofer creates an overwhelming space.

However, the speakers constituting the 3D surround system is not limited to 5.1 ch., and may be a group of plurality of speakers controlled independently such as 6.1 ch.

### (Contents of Guidance Patterns)

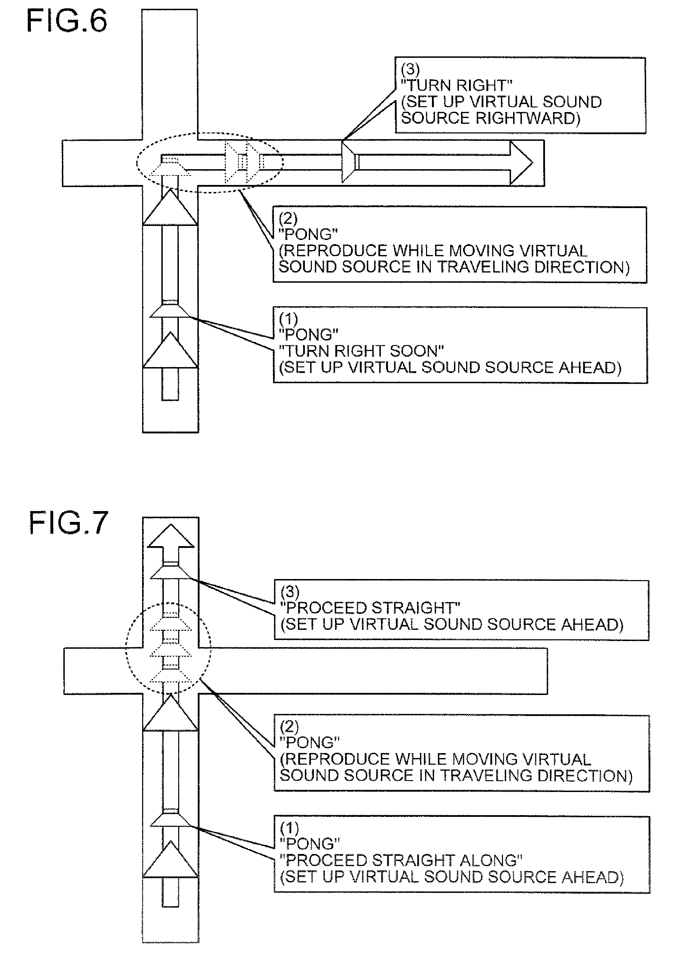

Next, contents of typical guidance patterns of the navigation device according to the embodiment of the present invention are described. Figs. 6 through 10 illustrate examples of typical guidance patterns of the navigation device according to the example of the present invention. Note that the following guidance patterns are the typical patterns and a variety of patterns are present in practice.

Guidance Pattern 1 (Right Direction Guidance):
As shown in Fig. 6, for example, at 300 meters before the branch point the guide tone "pong" is reproduced, followed by the reproduction of the guide voice "turn right soon". At this time, the virtual sound sources for both are set forward. That is, both the output of the guide tone and the output of the guide voice above are controlled so that both the guide tone and the guide voice are heard from the front side (1).

Then, just before the branch point (intersection), the guide tone "pong" is reproduced while moving the virtual sound source in the traveling direction (right direction). That is, the output of the guide tone above is controlled so that the guide tone is heard as if moving rightward from the front side (2). Subsequently, the guide voice "turn right" is reproduced. At this time, the virtual sound source is set rightward to which the guide tone is moved. That is, the output of the guide voice is controlled so that the guide voice is heard from the right side (3).

Guidance Pattern 2 (Straight-Through Guidance):
As shown in Fig. 7, for example, at 300 meters before the branch point, the guide tone "pong" is reproduced, followed by the reproduction of the guide voice "proceed straight along". At this time, the virtual sound sources for both of them are set forward. That is, both the output of the guide tone and the output of the guide voice above are controlled so that both the guide tone and the guide voice are heard from the front side (1).

Then, just before the branch point (intersection), the guide tone "pong" is reproduced while moving the virtual sound source in the traveling direction (front direction). That is, the output of the guide tone above is controlled so that the guide tone is heard as if moving frontward (2). Subsequently, the guide voice "proceed straight" is reproduced. At this time, the virtual sound source is set frontward to which the guide tone is moved. That is, the output of the guide voice is controlled so that the guide voice is heard from further ahead (3).

### Guidance Pattern 3 (Diagonally Right Direction Guidance) :

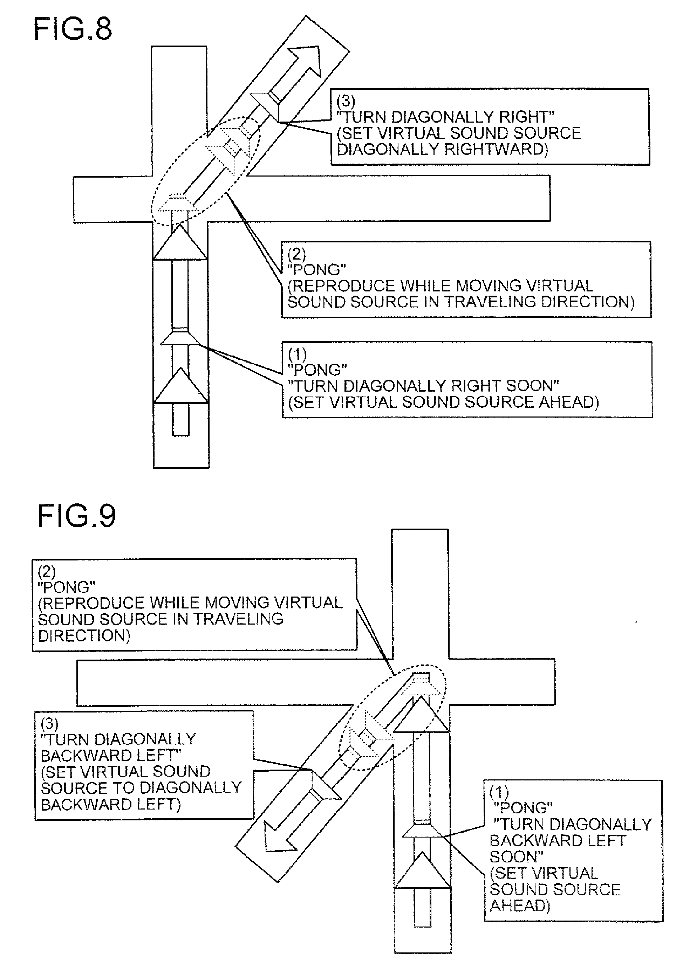

As shown in Fig. 8, for example, at 300 meters before the branch point, the guide tone "pong" is reproduced, followed by the reproduction of the guide voice "turn diagonally right soon". At this time, the virtual sound sources for both the guide tone and the guide voice are set forward. That is, both the output of the guide tone and the output of the guide voice above are controlled so that both the guide tone and the guide voice are heard from the front side (1).

Then, just before the branch point (intersection), the guide tone "pong" is reproduced while moving the virtual sound source in the traveling direction (diagonally right direction). That is, the output of the guide tone above is controlled so that the guide tone is heard as if moving diagonally rightward from the front (2). Subsequently, the guide voice "turn diagonally right" is reproduced. At this time, the virtual sound source is set diagonally rightward to which the guide tone is moved. That is, the output of the guide voice is controlled so that the guide voice is heard from the diagonally right side (3).

### Guidance Pattern 4 (Diagonally Backward Left Direction Guidance):

As shown in Fig. 9, for example, at 300 meters before the branch point, the guide tone "pong" is reproduced, followed by the reproduction of the guide voice "turn diagonally backward left soon". At this time, the virtual sound sources for both of them are set forward. That is, both the output of the guide tone and the output of the guide voice above are controlled so that both the guide tone and the guide voice are heard from the front side (1).

Then, just before the branch point (intersection), the guide tone "pong" is reproduced while moving the virtual sound source in the traveling direction (diagonally backward left direction). That is, the output of the guide tone above is controlled so that the guide tone is heard as if moving toward diagonally backward left direction from the front side(2). Subsequently, the guide voice "turn diagonally backward left" is reproduced. At this time, the virtual sound source is set to diagonally backward left to which the guide tone is moved. That is, the output of the guide voice is controlled so that the guide voice is heard from the diagonally backward left side (3).

### Guidance Pattern 5 (Consecutive Guidance):

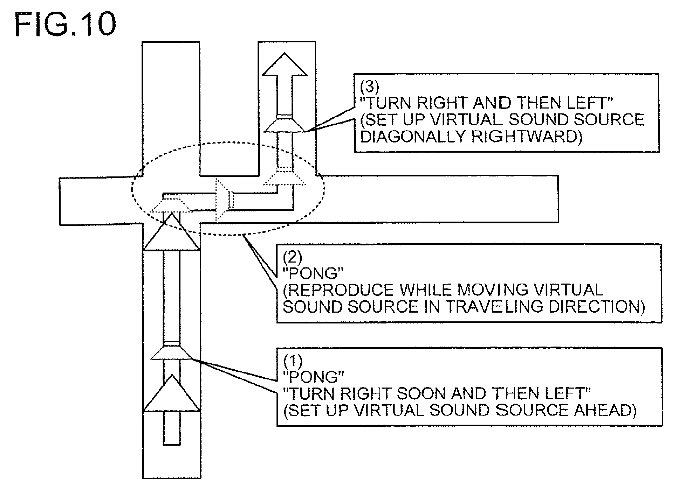

As show in Fig. 10, for example, at 300 meters before the branch point, the guide tone "pong" is reproduced, followed by the reproduction of the guide voice "turn right soon and then left". At this time, the virtual sound sources for both are set forward. That is, both the output of the guide tone and the output of the guide voice above are controlled so that both the guide tone and the guide voice are heard from the front side (1).

Then, just before the branch point (intersection), the guide tone "pong" is reproduced while moving the virtual sound source in the traveling direction (right →left) in the shape of a crank. That is, the output of the guide tone above is controlled so that the guide tone is heard as if moving rightward from the front side and then diagonally rightward, i.e., the direction parallel to the traveling direction (2). Subsequently the guide voice "turn right and then left" is reproduced. At this time, the virtual sound source is set diagonally rightward to which the guide tone is moved. That is, the output of the guide voice is controlled so that the guide voice is heard from the diagonally right side (3).

As described above, the virtual sound source is set in accordance with the relative position of the self-vehicle to the position of the guidance point of the route guidance so that the guidance is heard from the direction of the guidance point. The reproduction of the guidance by setting the virtual sound source at the guidance point may be performed only for the guidance just before the guidance point, while preliminary guidance is reproduced by setting the virtual sound source toward the front regardless of the guidance contents. In this manner, the guidance can always be heard from the traveling direction.

In addition, by reproducing only the guide tone as if the virtual sound source thereof is moving in the turning direction from the front side and reproducing the guide voice as if the virtual sound source thereof is present at the point to which the vehicle is turning, the guidance can be reproduced more directionally, while avoiding the contents of the guidance to be less audible.

### (Procedure of Process by Navigation Device)

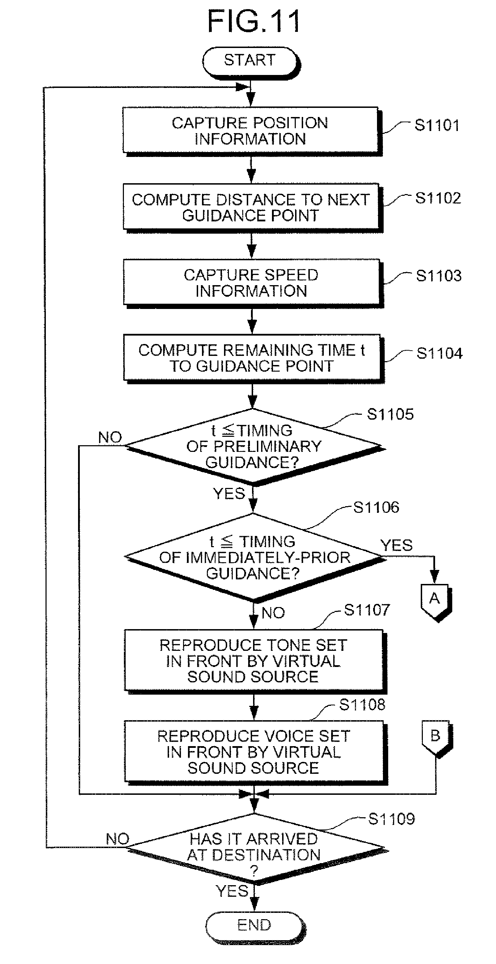

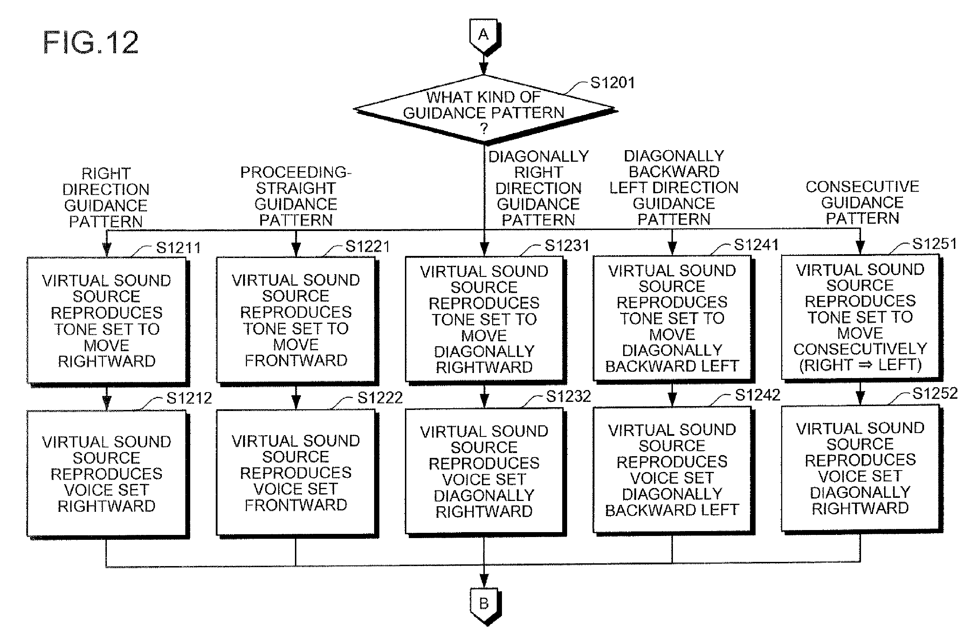

Next, the procedure of the navigation device according to the example of the present invention will be described. Figs. 11 and 12 are flowcharts illustrating the procedure of the navigation device according to the example of the present invention.

As shown in the flowchart in Fig. 11, the position information on the current position of the self-vehicle is captured first (step S1101). Then, the distance to the next guidance point is computed (step S1102). Subsequently the speed information of the self-vehicle is captured (step S1103), and remaining time t to the above-mentioned guidance point is computed based on the distance computed at step S1102 and the speed information captured at step S1103 (step S1104).

Next, it is determined whether the remaining time t computed at step S1104 is equal to or shorter than the time left until timing preliminary guided, i.e., t≤the timing of the preliminary guidance (step S1105). When t>the timing of the preliminary guidance (step S1105: NO), the procedure proceeds to step S1109 without doing anything.

In contrast, when t≤the timing of the preliminary guidance at step S1105 (step S1105: YES), then it is determined whether the computed remaining time t is equal to or shorter than the time left until timing of immediately-prior guidance, i.e., t≤the timing of the immediately-prior guidance (step S1106).

At step S1106, when t≤the timing of the immediately-prior guidance (step S1106: YES), the procedure proceeds to step S1201 of the flowchart shown in Fig. 12. In contrast, when t>the timing of the immediately-prior guidance (step S1106: NO), the virtual sound source reproduces the guide tone set in front (step S1107), followed by the virtual sound source reproducing the guide voice set forward (step S1108), and then the procedure proceeds to step S1109.

Subsequently, it is determined whether it has arrived at the destination at step S1109. If it has not arrived at the destination yet (step S1109: NO), the procedure returns to step S1101 to repeat the processing of the respective steps at steps S1101 through S1109, and if it has arrived at the destination at step S1109 (step S1109: YES), a series of the process is ended.

As shown in the flowchart in Fig. 12, the guidance pattern is judged first (step S1201). When the guidance pattern is the right direction guidance pattern, the procedure proceeds to step S1211 and the virtual sound source reproduces the tone set to move rightward (step S1211). Subsequently, the virtual sound source reproduces the voice set rightward (step S1212). Then, the procedure proceeds to step S1109 illustrated in Fig. 11.

When the guidance pattern is the straight-through guidance pattern, the procedure proceeds to step S1221 and the virtual sound source reproduces the tone set to move frontward (step S1221). Subsequently, the virtual sound source reproduces the voice set frontward (step S1222), and then the procedure proceeds to step S1109 illustrated in Fig. 11.

When the guidance pattern is the diagonally right direction guidance pattern, the procedure proceeds to step S1231 and the virtual sound source reproduces the tone set to move diagonally rightward (step S1231). Subsequently, the virtual sound source reproduces the voice set diagonally rightward (step S1232), and then the procedure proceeds to step S1109 illustrated in Fig. 11.

When the guidance pattern is the diagonally backward left guidance pattern, the procedure proceeds to step S1241 and the virtual sound source reproduces the tone set to move diagonally backward left (step S1241). Subsequently, the virtual sound source reproduces the voice set diagonally backward left (step S1242), and then the procedure proceeds to step S1109 illustrated in Fig. 11.

When the guidance pattern is the consecutive guidance pattern, the procedure proceeds to step S1251 and the virtual sound source reproduces the tone set to move consecutively (right→left) (step S1251). Subsequently, the virtual sound source reproduces the voice set diagonally rightward (step S1252), and then the procedure proceeds to step S1109 illustrated in Fig. 11.

Note that the guidance patterns in the flowchart are the typical patterns and a variety of patterns are present in practice.

### (Contents of Safety Guidance)

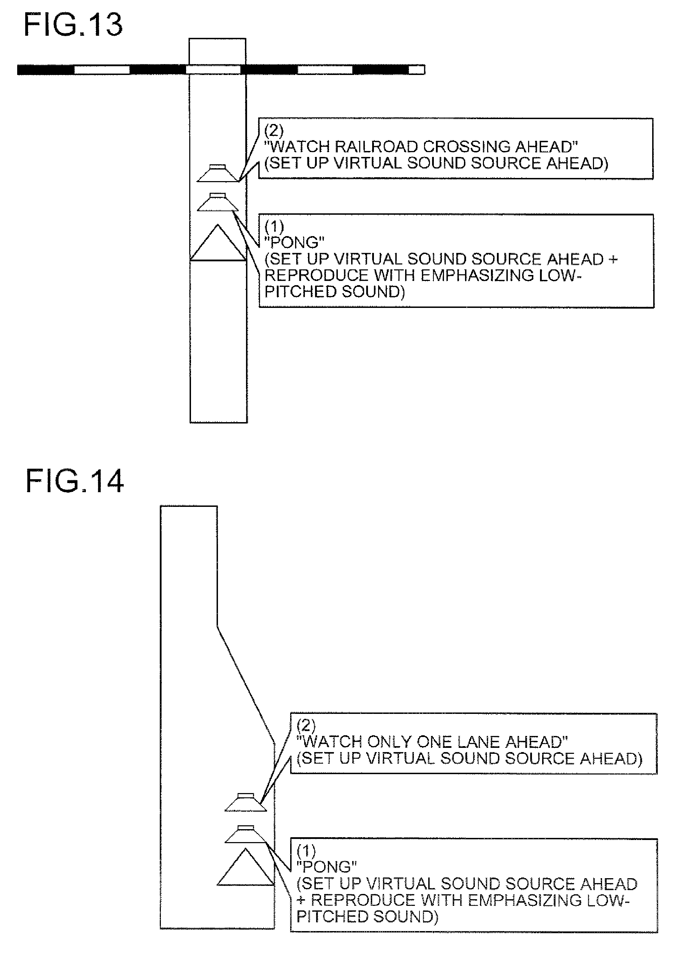

Next, contents of safety guidance are described. When there is a railroad crossing or a lane ends ahead in the traveling direction and the guide sound is to be reproduced in advance for warning, the guide tone with the low-pitched sound being emphasized is reproduced upon reproducing the guide sound to call attention more. In this case, the subwoofer 516 is used for emphasis of the low-pitched sound. Figs. 13 and 14 illustrate other examples of the typical guidance pattern of the navigation device according to the example of the present invention, representing the contents of the safety guidance.

As shown in Fig. 13, before the railroad crossing, the guide tone "pong" is reproduced by the virtual sound source set forward while emphasizing the low-pitched sound (1). Subsequently, the guide voice "watch a railroad crossing ahead" is reproduced. At this time, the virtual sound source is set forward (2).

As shown in Fig. 14, before a lane ends, the guide tone "pong" is reproduced by the virtual sound source set forward while emphasizing the low-pitched sound (1). Subsequently, the guide voice "watch, only one lane ahead" is reproduced. At this time, the virtual sound source is set forward (2). Although illustration is omitted here, the virtual sound source may also be set so that the guide tone moves in the direction of the lane to which the vehicle should be moved.

### (Destination Location Guidance)

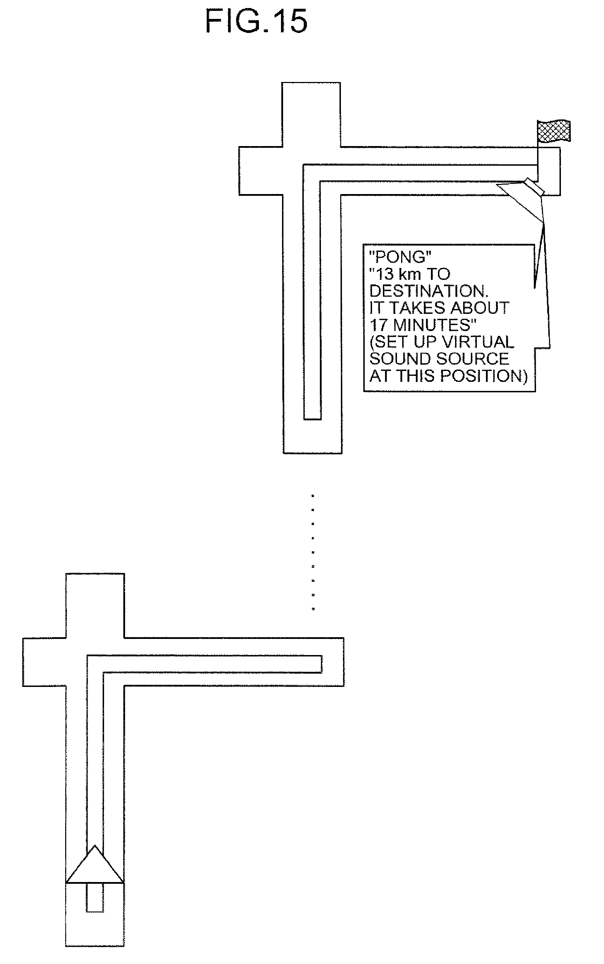

Next, contents of destination guidance are described. By operation of the operator, voice guidance of the destination is reproduced as if the voice guidance is heard from the direction of the destination. Fig. 15 illustrates another example of the typical guidance pattern of the navigation device according to the example of the present invention, representing the contents of the destination guidance.

As shown in Fig. 15, when the destination is in the diagonally right direction from the self-vehicle position, the virtual sound source is set at the destination to reproduce the guide tone "pong" and then the guide voice "13 kilometers to the destination. It takes about 17 minutes".

Incidentally, while the above examples are described with respect to a car navigation device, similar contents may be realized in mobile navigation for a portable telephone or the like using headphones equipped with the 3D surround system, for example.

As described above, according to the embodiment, the 3D surround system 100 including plural speakers is provided, the guidance-information acquiring unit 101 acquires the information on the route guidance, and the control unit 102 controls the output of the guide sound so that the direction from which this guide sound is heard moves based on the information acquired by the guidance-information acquiring unit 101 using at least two speakers included in the speaker group 103 at the same time, so that it can be recognized intuitively that the direction to which the guide sound is moved is the guidance direction, enabling misconception of the guidance direction being reduced.

Moreover, according to the embodiment, the control unit 102 controls the output of the guide sound to be heard substantially from the front side of the traveling direction and then to be moved substantially toward the guidance direction based on the information acquired by the guidance-information acquiring unit 101. As a result, the driver can recognize the guidance direction with less feeling of uncomfortableness.

Moreover, according to the embodiment, the control unit 102 controls the output of the sound effect included in the guide sound (for example, the tone) to be heard substantially from ahead in the traveling direction, then to be moved substantially toward the guidance direction, and subsequently controls the output of the guide voice included in the guide sound to be heard substantially from the guidance direction, thereby avoiding the voice to be less audible because only the tone is moved while the voice is not moved.

Furthermore, according to the embodiment, the control unit 102 carries out the control only for the guidance at a point just before the branch point. Thus, it is possible to intuitively recognize the guidance of which the guide sound moves is the immediately-prior guidance.

Moreover, according to the embodiment, the 3D surround system 100 including plural speakers is provided, the guidance-information acquiring unit 101 acquires the information on the guidance, and the control unit 102 controls the output of the guide sound based on the information (for example, the hazard information or the attention-calling information in the traveling direction) acquired by the guidance-information acquiring unit 101 using the low-pitched sound speaker 104 included in the speaker group 103 and the speaker group 103 at the same time, so that, using the subwoofer 104 upon outputting the guidance information when the guidance information is the hazard information or the attention-calling information, it can be perceived unconsciously that there is a dangerous situation or the situation that the attention must be called in the traveling direction, thereby allowing to contribute to safer driving and travel.

Furthermore, according to the embodiment, the 3D surround system 100 is provided, the predetermined-point-information acquiring unit 105 acquires the information on the predetermined point, such as the information on the destination point in the route guidance or the registered point which is set arbitrarily, and the control unit 102 controls the output of the guide sound to be heard from the direction of the predetermined point based on the information acquired by the above-mentioned predetermined-point-information acquiring unit 105, so that, by notifying the direction of the predetermined point (for example, the destination point or the registered point) with the guide sound, it can be recognized readily of the direction of the predetermined point, such as the destination point or the registered point toward which the vehicle is traveling at present, without checking the display screen.

The navigation method according to the embodiments may be a program prepared in advance that can be read by a computer (for example, a microcomputer), and is achieved by executing the program by the computer. The program is recorded on the computer-readable recording medium, such as the HD, an FD, a CD-ROM, an MO, and the DVD, and is executed by the computer reading out from the recording medium. In addition, the program may be a transmission medium that can be distributed through a network such as the Internet.

## Claims

1. A navigation device provided with a 3D surround system including a plurality of speakers, comprising:
a guidance-information acquiring unit that acquires information on route guidance; and
a control unit that controls output of a guide sound so that a direction from which the guide sound is heard moves, based on the information acquired by the guidance-information acquiring unit, using at least two speakers among the speakers at the same time.

2. The navigation device according to claim 1, wherein the control unit controls the output of the guide sound to be heard substantially from a front side in a traveling direction and then to be moved substantially toward a guidance direction based on the information acquired by the guidance-information acquiring unit.

3. The navigation device according to claim 2, wherein the control unit controls output of a sound effect included in the guide sound to be heard substantially from the front side in the traveling direction, then to be moved substantially toward the guidance direction, and subsequently controls output of a guide voice included in the guide sound to be heard substantially from the guidance direction.

4. The navigation device according to any one of claims 1 to 3, wherein the control unit carries out the control only upon the guidance just before a branch point.

5. A navigation device provided with a 3D surround system including a plurality of speakers, comprising:
a guidance-information acquiring unit that acquires information on guidance; and
a control unit that controls output of a guide sound based on the information acquired by the guidance-information acquiring unit using a speaker only for low-pitched sound reproduction and a speaker other than the speaker only for low-pitched sound reproduction among the speakers.

6. The navigation device according to claim 5, wherein the control unit uses the speaker only for low-pitched sound reproduction based on any one of hazard information and attention-calling information in a traveling direction included in the information acquired by the guidance-information acquiring unit.

7. A navigation device provided with a 3D surround system including a plurality of speakers, comprising:
a predetermined-point-information acquiring unit that acquires information on a predetermined point; and
a control unit that controls output of a guide sound so that the guide sound is heard from a direction of the predetermined point based on the information acquired by the predetermined-point-information acquiring unit.

8. The navigation device according to claim 7, wherein the information on the predetermined point is information on a destination point in route guidance or a registered point arbitrarily set.

9. A navigation method using a 3D surround system including a plurality of speakers, comprising:
a guidance-information acquiring step of acquiring information on route guidance; and
a control step of controlling output of a guide sound so that a direction from which the guide sound is heard moves, based on the information acquired at the guidance-information acquiring step, using at least two speakers among the speakers at the same time.

10. A navigation method using a 3D surround system including a plurality of speakers, comprising:
a guidance-information acquiring step of acquiring information on guidance; and
a control step of controlling output of a guide sound based on the information acquired at the guidance-information acquiring step using a speaker only for low-pitched sound reproduction and a speaker other than the speaker only for low-pitched sound reproduction among the speakers.

11. A navigation method using a 3D surround system including a plurality of speakers, comprising:
a predetermined-point-information acquiring step of acquiring information on a predetermined point; and
a control step of controlling output of a guide sound so that the guide sound is heard from a direction of the predetermined point based on the information acquired at the predetermined-point-information acquiring step.

12. A navigation program that causes a computer to execute any one of the navigation methods according to claims 9 to 11.

13. A computer-readable recording medium that stores therein the navigation program according to claim 12.
